Europäisches Patentamt

European Patent Office

Office européen des brevets

Veröffentlichungsnummer: **0 362 627**

**A2**

## EUROPÄISCHE PATENTANMELDUNG

Anmeldenummer: 89117455.9

Int. Cl.⁵ **B23Q 5/40**

Anmeldetag: 21.09.89

Priorität: 03.10.88 DE 3833577

Veröffentlichungstag der Anmeldung:
**11.04.90 Patentblatt 90/15**

Benannte Vertragsstaaten:
**DE FR GB SE**

Anmelder: **Firma Carl Zeiss**

**D-7920 Heidenheim (Brenz)(DE)**
**DE FR SE**

Anmelder: **CARL-ZEISS-STIFTUNG trading as**
**CARL ZEISS**

**D-7920 Heidenheim (Brenz)(DE)**
**GB**

Erfinder: **Leitenberger, Werner**
**Ziegeläcker 16**
**D-7920 Heidenheim(DE)**
Erfinder: **Matzkovits, Berthold**
**Silcherweg 2**
**D-7929 Gerstetten(DE)**

Antrieb für linear geführte Maschinenteile.

Zur querkraftfreien, spielfreien Übertragung der Antriebskraft eines Spindelantriebes auf ein geführtes Teil ist ein Verbindungselement in Form eines Rohres (17) vorgesehen, welches die Spindel (7) umgibt und an zwei axial beabstandeten Stellen kardanisch geschlitzt ist. Dieses Rohr ist torsionssteif und bildet deshalb gleichzeitig die Verdrehsicherung für den Spindelantrieb.

In Verbindung mit einem Spindelantrieb nach dem sogenannten Reibringprinzip, der eine glatte, feststehende Welle (7) vorsieht, sind außerdem Maßnahmen zur Beseitigung von Schwingungen im Antrieb angegeben.

EP 0 362 627 A2

Fig. 1

## Antrieb für linear geführte Maschinenteile

Für den Antrieb der beweglichen Meßschlitten von Koordinatenmeßgeräten werden heute überwiegend Bandantriebe verwendet. Bandantriebe erlauben zwar eine weitgehend querkraftfreie Übertragung der Antriebskraft auf das geführte Teil, besitzen jedoch eine ganze Reihe von Nachteilen in Bezug auf die Steifigkeit des Antriebes und die übertragbaren Antriebskräfte bzw. erzielbaren Verfahrgeschwindigkeiten.

Es ist daher bereits vorgeschlagen worden, Spindelantriebe in Koordinatenmeßgeräten einzusetzen.

Setzt man Spindelantriebe in Koordinatenmeßgeräten ein, so muß durch geeignete Maßnahmen sichergestellt werden, daß keine Querkräfte aufgrund eines unregelmäßigen Laufs bzw. Vibrationen der Antriebseinheit auf das geführte Teil übertragen werden. Hierzu werden in der Regel flexible oder in Querrichtung frei beweglich gelagerte Verbindungselemente zwischen die Antriebsspindel und das geführte Teil gesetzt. Entsprechende Lösungen sind u.a. in der US-PS 43 72 222, der US-PS 44 83 209, der US-PS 45 97 303, der US-PS 41 91 059 sowie der US-PS 43 72 223 beschrieben.

Beispielsweise besteht das in der US-PS 43 72 222 beschriebene Verbindungselement aus zwei Stäben, die beiderseits der Antriebsspindel liegend die Spindelmutter mit dem geführten Teil verbinden. Da dieses Verbindungselement ebenso wie die in den anderen Schriften offenbarten unterschiedlichen Verbindungselemente keine ausreichende Torsionssteifigkeit besitzt, sind in der Regel zusätzlich radial vom Antrieb wegragende Hebel vorgesehen, über die sich die Spindelmutter in einer parallel zur Führungsrichtung erstreckenden Hilfsführung abstützt.

Die beschriebenen Lösungen sind aufwendig und teuer, da stets mehrere Bauelemente aufeinander abgestimmt werden müssen. Außerdem läßt sich eine spielfreie Verbindung zwischen der Antriebsmutter und dem geführten Teil mit den bekannten Maßnahmen nur schwer erreichen.

Es ist die Aufgabe der vorliegenden Erfindung, bei einem Antrieb der eingangs genannten Art eine spielfreie, axial und bezüglich Torsion steife Verbindung zwischen der Spindelmutter und dem geführten Teil mit möglichst einfachen Mitteln herzustellen. Hierbei soll das verbindende Element außer dem Torsionsmoment keine zusätzlichen Querkräfte vom Antrieb auf das geführte Teil übertragen.

Diese Aufgabe wird gemäß den im Kennzeichen des Hauptanspruches angegebenen Maßnahmen dadurch gelöst, daß das Verbindungselement ein die Spindel umgebendes Rohr ist, welches an mindestens zwei axial beabstandeten Stellen mit Schlitzen versehen ist.

Gemäß der Erfindung wird die spielfreie, axial und torsionssteife Ankopplung zwischen Spindelmutter und geführtem Teil durch ein einziges Bauelement bewerkstelligt. Hierbei wird das geführte Teil bezüglich Querkräften senkrecht zur Führungsrichtung durch in das Rohr eingebrachte Schlitze entkoppelt, die die Wandung des Rohres an den beiden Stellen soweit schwächen, daß es Relativbewegungen zwischen Antrieb und geführtem Teil elastisch nachgeben kann.

Zweckmäßig sind an den beiden Enden des Rohres jeweils zwei Paare von aufeinander zulaufenden Schlitzen aus um 90° unterschiedlichen Richtungen so eingebracht, daß zwischen den Schlitzen jedes Paares elastisch deformierbare Stege verbleiben. Die Doppelschlitzpaare bewirken, daß jedes der beiden Enden des Rohres allseitig gegen die Längsachse geneigt werden kann. Die verbleibenden Stege bilden sozusagen ein doppeltes Kardangelenk.

Es ist weiterhin möglich, das geschlitzte Rohr aus mehreren Teilen so aufzubauen, daß es die Spindelmutter des Antriebs umgibt. Die Spindelmutter ist damit in das Bauelement integriert, die sie mit dem anzutreibenden Teil verbindet, so daß ein sehr kompakter Aufbau für den Antrieb resultiert.

Selbstverständlich ist das Verbindungselement für jede Art von Spindelantrieb brauchbar, also beispielsweise für Gewindespindeln, Kugelumlaufspindeln etc.. Es eignet sich auch vorzüglich für Spindelantriebe nach dem sogenannten Rollringprinzip, die aus einer glatten Welle und einer darauf laufenden Mutter in Form eines Rollringgetriebes bestehen. Derartige Antriebe sind beispielsweise in der DE-PS 27 09 006 beschrieben.

Wenn Antriebe nach dem Rollringprinzip so verwendet werden, daß nicht die Welle selbst sondern die Spindelmutter angetrieben wird und die Welle des Reibringgetriebes feststeht, treten zusätzliche Probleme auf. In der Regel ist eine Spindel bzw. Welle nie völlig gerade sondern besitzt auch im Bereich der Spindelmutter eine geringe Durchbiegung. Bei rotierender Spindel bzw. Welle ändert sich die Richtung der Durchbiegung bezüglich der Spindellagerung während einer Umdrehung nicht. Wenn die Welle jedoch fest eingespannt gelagert ist, ändert sich die Durchbiegungsrichtung in Abhängigkeit der Rotationsbewegung der Spindelmutter, so daß beim Abwälzen der Mutter auf der Welle grundsätzlich Biegeschwingungen im Spindelantrieb induziert werden.

Aus der DE-OS 37 00 430 ist es bekannt, Vibrationen in Spindelantrieben dadurch zu beseitigen, daß die Spindelmutter wesentlich verlängert wird. Hierdurch wird jedoch die Baugröße des Spindelantriebes drastisch erhöht, so daß dies für viele Anwendungsfälle keine Lösung ist. Für Spindelantriebe nach dem Rollringprinzip ist diese Maßnahme außerdem nicht geeignet.

Eine weitere Aufgabe der vorliegenden Erfindung ist es deshalb, das Entstehen von Schwingungen bzw. Vibrationen in Spindelantrieben überhaupt zu vermeiden. Denn solche Schwingungen können sich trotz des vorstehend beschriebenen radial nachgiebigen Verbindungselementes als Körperschall auf das geführte Teil übertragen.

Zu diesem Zweck sind gemäß der Erfindung Mittel zur Beseitigung der Unwucht zwischen Motor und Welle vorgesehen bzw. Mittel zur Beseitigung der unteren Durchbiegung der Welle vorgesehen.

Weitere vorteilhafte Ausgestaltungen der Erfindung ergeben sich aus der nachfolgenden Beschreibung von Ausführungsbeispielen anhand der Figuren 1-5 der beigefügten Zeichnungen.

Figur 1 ist eine Prinzipskizze, die die wesentlichen Teile eines Spindelantriebs nach dem Rollringprinzip für linear geführte Teile zeigt;

Figur 2 ist eine Ansicht des Verbindungselement (17) aus Figur 1 in vergrößertem Maßstab;

Figur 3 ist eine vereinfachte Prinzipskizze, die eine Spindelmutter nach dem Rollringprinzip mit einer verstellbaren Zusatzmasse für einen dynamischen Unwuchtausgleich im Schnitt zeigt;

Figur 4 zeigt eine Spindelmutter nach dem Rollringprinzip mit Mitteln für einen statischen Unwuchtausgleich;

Figur 5 zeigt ein weiteres Ausführungsbeispiel für ein Verbindungselement in Form eines geschlitzten Rohres, teils in Ansicht, teils im Schnitt.

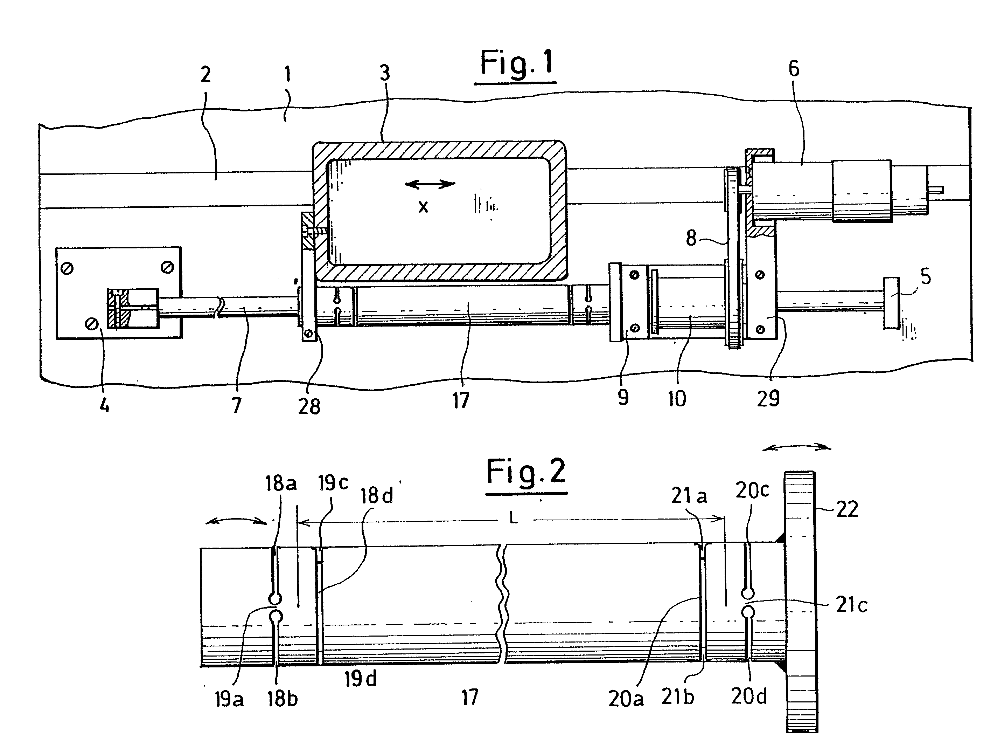

In Figur 1 ist das wie durch den Pfeil "X" angedeutet linear geführte Maschinenteil mit (3) bezeichnet. Bei dem Teil (3) handelt es sich um den Fuß des verschieblichen Portals eines Korodinatenmeßgerätes, der auf dem Meßtisch (1) durch die Führungsleiste (2) geführt ist.

Parallel zur Führungsleiste (1) ist eine glatte feststehende Welle (7) angeordnet. Diese Welle (7) wird von zwei Böcken (4 und 5) gehalten. Dort ist die Welle an beiden Enden eingespannt.

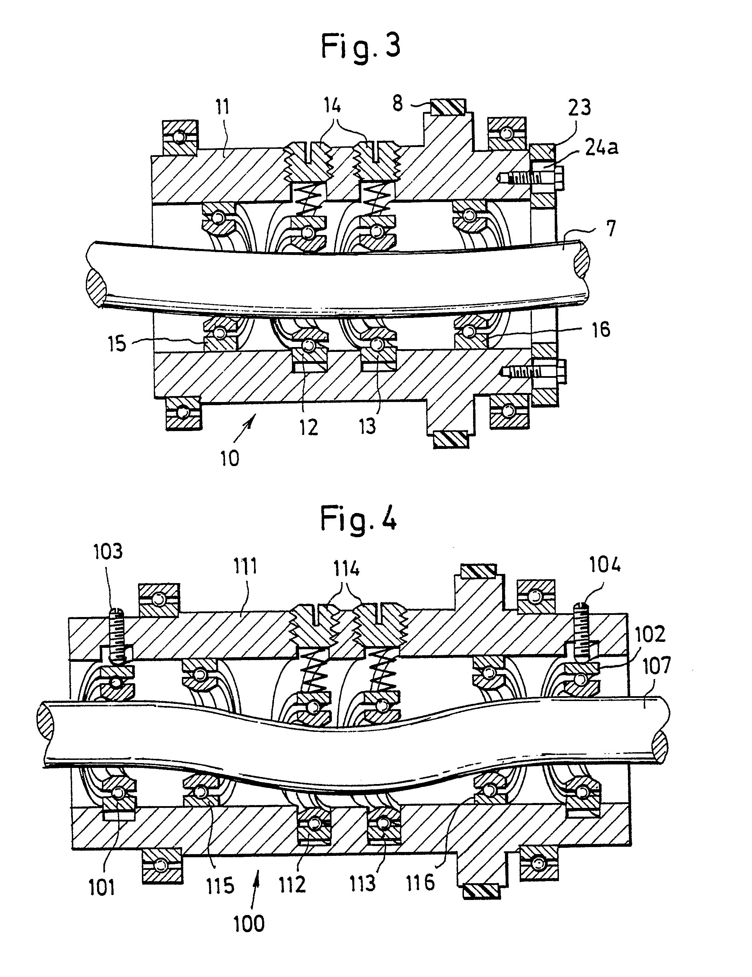

Auf der glatten Welle (7) läuft eine nach dem Rollringprinzip arbeitende Spindelmutter (10). Diese Spindelmutter (10), die noch anhand von Figur 3 bzw. 4 beschrieben werden wird, ist drehbeweglich in einem Muttergehäuse (9) gelagert und wird von einem Elektromotor (6) über ein Bandgetriebe (8) angetrieben. Der Motor (6) ist mittels eines Halters (29) an das Gehäuse (9) der Spindelmutter (10) angesetzt.

Das geführte Maschinenteil (3) ist über ein die feststehende Welle (7) umgebendes geschlitztes Rohr (17) mit dem Gehäuse (9) der Spindelmutter verbunden. Hierzu ist das vordere Ende des Rohres (17) mit Hilfe einer Klammer (28) an das Teil (3) angeschraubt und das hintere Ende des Rohres (17) trägt einen Flansch (22), der mit dem Gehäuse (9) der Spindelmutter (10) verschraubt ist.

Wie aus der vergrößerten Darstellung des Rohres (17) nach Figur 2 hervorgeht, sind an beiden Enden des Rohres (17) zwei Paare von radial verlaufenden Schlitzen (18a/b und 18c/d) bzw. (20a/b und 20C/d) so eingebracht, daß zwischen den aus entgegengesetzten Richtungen aufeinanderzulaufenden Schlitzen jedes Paares jeweils dünne Stege verbleiben. Die in der Ansicht nach Figur 2 sichtbaren Stege sind mit (19a-d bzw. 21a-c) bezeichnet. Da die Schlitzpaare an beiden Enden des Rohres und damit auch die Stegpaare (19a/b und 19c/d) radial um 90° gegeneinander versetzt sind, wirken die Stegpaare an beiden Enden des Rohres (17) wie Kardangelenke, die durch einen Abstand L voneinander getrennt sind. Die Rohrenden sind somit allseitig um die elastisch nachgebende Stege (19) bzw. (21) kippbar, so daß sich die Rohrenden radial gegeneinander verlagern können. Andererseits ist das Rohr jedoch bezüglich Axialbewegungen und Torsionsbewegungen äußerst steif. Diese Lösung mit dem doppelkardanisch geschlitzten, koaxial um die Welle (7) gelegten Rohr vereinigt also mehrere Funktionen nämlich einmal dient sie der Übertragung der Antriebskraft, gleichzeigt wirkt sie als Verdrehsicherung und entkoppelt weiterhin das geführte Teil (3) gegenüber störenden Querkräften des Antriebs.

Zwar ist in Figur 1 eine Lösung dargestellt, bei der die Welle (7) feststeht und die Spindelmutter (10) rotiert, es ist jedoch klar, daß das Verbindungselement (17) auch für Spindelantriebe mit feststehender Mutter und rotierender Welle geeignet ist.

Spindelantriebe mit feststehender Spindel, wie der in Figur 1 dargestellte, eignen sich insbesondere für sehr lange Verfahrwege. Andererseits treten bei dieser Form des Antriebs dann, wenn es sich bei der Spindel um ein sogenanntes Rollringgetriebe handelt, aufgrund der Verbiegung der Welle im Bereich der Mutter durch die Rollringe Vibrationen auf. Dies wird durch die Darstellung nach Figur 3 verdeutlicht. In Figur 3 ist die Spindelmutter (10) aus Figur 1 in vergrößertem Maßstabe dargestellt. Sie besteht üblicherweise aus einem zylindrischen Träger (11), in den vier wälzgelagerte Rollringe (12/13 und 15/16) so eingebaut sind, daß ihre Achse gegenüber der Längsachse der Spindelmutter schräggestellt ist.

Die Rollringe besitzen einen größeren Durchmesser als die Welle (7), auf der sie laufen. Der bzw. die inneren Rollringe (12/13) sind hierbei gegenüber den äußeren Rollringen (15 und 16) entgegengesetzt geneigt und werden von einer Seite durch eine Druckschraube (14) an die Welle (7) angelegt. Dieses Verspannen ist nötig, um den für die Fortbewegung der Mutter nötigen Reibschluß mit der Welle (7) zu erzeugen.

Aufgrund der Verspannung biegt sich die Welle (7) im Bereich der Mutter (10) durch, wie dies in Figur 3 übertrieben dargestellt ist. Rotiert nun die Mutter (10), dann ändert sich auch die Richtung der Durchbiegung im Zuge der Rotationsbewegung und als Folge treten Vibrationen bzw. Schwingungen in der Welle auf, die sich auf das geführte Teile (3) übertragen können und dessen Funktion beeinträchtigen. Wird ein solcher Antrieb für Koordinatenmeßgeräte verwendet, dann verursachen diese Schwingungen Meßunsicherheiten bei der Bestimmung der Istlage des geführten Teiles und können außerdem zu Fehlfunktionen in den empfindlichen mechanischen Tastköpfen des Gerätes führen.

Um diese Schwingungen zu unterdrücken ist an den Trägerkörper (11) der Spindelmutter (10) eine Zusatzmasse (23) angeschraubt, die aufgrund der für die Befestigung gewählten Langlöcher (24a) radial verschoben werden kann. Diese Zusatzmasse ermöglicht es, die aufgrund der Durchbiegung der Welle (7) entstehende Unwucht dynamisch zu kompensieren. Damit ergibt sich ein ruhiger Lauf der Spindelmutter (10) und Vibrationen sind weitgehend unterdrückt.

Ein alternatives Ausführungsbeispiel zur Lösung des angesprochenen Problems ist in Figur 4 dargestellt. Die dort mit (100) bezeichnete Spindelmutter enthält in ihrem Trägerkörper (111) neben den schräggestellten Reibringen (112/113) und (115/116) an beiden Enden je einen weiteren Rollring (101) bzw. (102). Die zusätzlichen Rollringe (101) und (102) sind über Einstellschrauben (103) bzw. (104) radial zustellbar, wobei die Zustellbewegung in der gleichen Richtung erfolgt, wie die Andruckkraft der inneren Rollringe (113) bzw. (112) wirkt. Mit diesen zusätzlichen Rollringen (101) und (102) wird der Durchbiegung der Welle (107) entgegengewirkt, so daß die Achse der Welle (107) mit der Achse der Mutter (100) fluchtet.

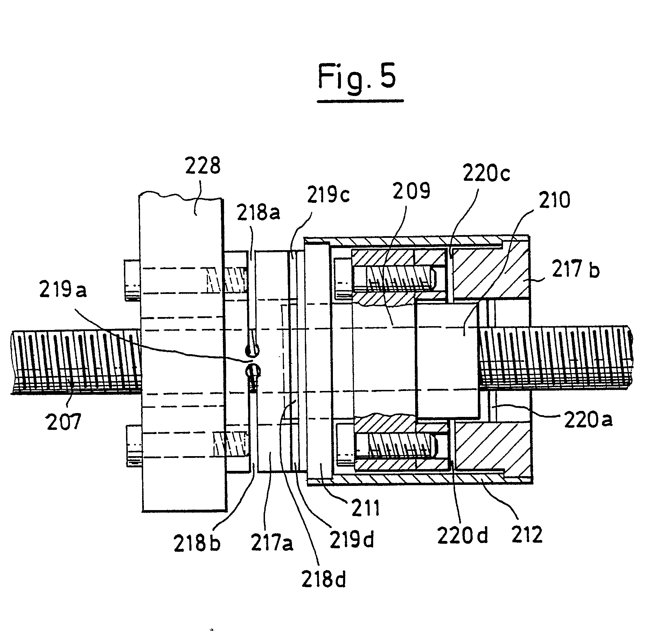

In Figur 5 ist ein weiteres Ausführungsbeispiel für ein Verbindungselement in Form eines geschlitzten Rohres dargestellt, das insbesondere für einen Antrieb mit stehender Spindelmutter (210) und rotierender Spindel (207) geeignet ist und einen äußerst kompakten Aufbau garantiert.

Das geschlitzte Rohr besteht hier aus zwei Hälften (217a und 217b), die jeweils mit einem Paar Doppelschlitze (218a/b, und 218c/d) bzw. (220a/b und 220c/d) versehen sind. Diese beiden Hälften (217a und 217b) sind durch ein Mittelstück (212) mit etwas größerem Durchmesser miteinander verbunden, wobei das Mittelstück (212) die hintere Hälfte (217b) übergreift. An der vorderen Rohrhälfte (217a) ist das Mittelstück (212) auf einen Flansch (211) aufgeschraubt.

Die vordere Rohrhälfte (217a) ist an einen Bügel (218) an dem anzutreibenden Teil (nicht dargestellt) angeschraubt.

Die Spindelmutter (210), die von der Gewindespindel (207) angetrieben wird, befindet sich im Innern des geschlitzten Rohres. Sie ist über einen Ring (209), in den sie eingesetzt ist, an das vordere Ende der hinteren Rohrhälfte (217b) angeschraubt. Der Abstand zwischen der Spindelmutter (210) bzw. ihrem Haltering (209) und dem Mittelstück (212) des Rohres ist so bemessen, daß die Spindelmutter die durch das geschlitzte Rohr vom geführten Teil entkoppelten Bewegungen quer zur Spindelachse ohne anzustoßen ausführen kann.

## Ansprüche

1. Antrieb für linear geführte Maschinenteile mit einem Motor (6), einem Spindelantrieb (7-10) und einem Verbindungselement (17), das die Vorschubbewegung des Spindeltriebs querkraftfrei auf das geführte Maschinenteil (3) überträgt, dadurch gekennzeichnet, daß das Verbindungselement ein die Spindel umgebendes Rohr (17) ist, welches an mindestens zwei axial beabstandeten Stellen mit Schlitzen (18a-d,20a-d) versehen ist.

2. Antrieb nach Anspruch 1, dadurch gekennzeichnet, daß an beiden Stellen des Rohres jeweils zwei Paare von radial aufeinander zulaufenden Schlitzen aus um 90° unterschiedlichen Richtungen so eingebracht sind, daß zwischen den Schlitzen jedes Paares elastisch deformierbare Stege (19a/b,21a/b) verbleiben.

3. Antrieb nach Anspruch 1, dadurch gekennzeichnet, daß der Spindeltrieb aus einer glatten Welle (7) und einer darauf laufenden Mutter in Form eines Rollringgetriebes (10,100) besteht.

4. Antrieb nach Anspruch 3, dadurch gekennzeichnet, daß die Mutter (10) des Spindeltriebes angetrieben ist und die Welle (7) feststeht, und daß Mittel (23,24a) zur Beseitigung der Unwucht zwischen Mutter und Welle vorgesehen sind.

5. Antrieb nach Anspruch 4, dadurch gekennzeichnet, daß als Mittel zur Beseitigung der Unwucht eine verstellbare Zusatzmasse (23) an der Mutter (10) angebracht ist.

6. Antrieb nach Anspruch 3, dadurch gekennzeichnet, daß Mittel zur Beseitigung der internen Durchbiegung der Welle in Form von zusätzlichen, radial definiert einstellbaren Andruckringen (101,102) an beiden Seiten des Rollringge triebes (100) vorgesehen sind.

7. Antrieb nach Anspruch 1 oder 2, dadurch gekennzeichnet, daß das Rohr (217) aus mehreren Teilen (217a,212,217b) zusammengesetzt ist und die Spindelmutter (210) des Antriebs umgibt.

8. Antrieb für linear geführte Maschinenteile mit einem Motor, einem Spindeltrieb und einem Verbindungselement, das die Vorschubbewegung des Spindeltriebes querkraftfrei auf das geführte Maschinenteil überträgt, wobei die Mutter des Spindeltriebes durch den Motor angetrieben ist, dadurch gekennzeichnet, daß die Mutter als auf einer glatten, feststehenden Welle bzw. Achse (107) laufendes Rollringgetriebe (100) ausgebildet ist, welches mehrere, zur Längsachse der Mutter geneigte Rollringe (112,113,115,116) und an beiden Enden des Rollringgetriebes (100) zusätzliche, radial definiert einstellbare Andruckringe (101,102) enthält.

9. Antrieb nach einem der Ansprüche 1-8, gekennzeichnet durch seine Verwendung zum Antrieb eines beweglichen Meßschlittens in Koordinatenmeßgeräten.

## Fig.1

## Fig.2

EP 0 362 627 A2

## Fig. 3

## Fig. 4

# Fig. 5